# EUROPÄISCHE PATENTSCHRIFT

(11) **EP 0 697 955 B1**
(45) Veröffentlichungstag und Bekanntmachung des Hinweises auf die Patenterteilung: **05.03.1997**
(21) Anmeldenummer: 94915146.8
(22) Anmeldetag: 29.04.1994
(51) Int. Cl.: B29D 31/00, B29D 24/00

(54) **VERFAHREN ZUR HERSTELLUNG EINES WABENKÖRPERS SOWIE WABENKÖRPER**
PROCESS FOR PRODUCING A HONEYCOMB STRUCTURE AND HONEYCOMB STRUCTURE SO PRODUCED
PROCEDE DE FABRICATION D'UN CORPS A ALVEOLES ET CORPS ALVEOLE AINSI REALISE

(30) Priorität: 05.05.1993 DE 4314861
(43) Veröffentlichungstag der Anmeldung: 28.02.1996
(73) Patentinhaber: Tubus Bauer Gmbh, D-79713 Bad Säckingen (DE)
(72) Erfinder: DUCHENE, Rainer, D-79379 Müllheim (DE)
(74) Vertreter: Patent- und Rechtsanwaltssozietät, Schmitt, Maucher & Börjes
(86) Internationale Anmeldenummer: EP9401371
(87) Internationale Veröffentlichungsnummer: WO9425258

(56) Entgegenhaltungen:
- CH-A- 663 378
- GB-A- 1 532 112

## Beschreibung

Die Erfindung betrifft ein Verfahren zur Herstellung eines Wabenkörpers, welcher aus einer Vielzahl von miteinander seitlich verklebten Röhrchen besteht.
Die Erfindung befaßt sich auch mit einem Wabenkörper, der insbesondere nach dem eingangs erwähnten Verfahren hergestellt ist.

Wabenkörper oder kurz Waben werden für eine ganze Reihe von Anwendungsfällen eingesetzt. Unter anderem werden sie zur Herstellung sogenannter Sandwich-Platten verwendet, wo stirnseitig an einer oder beiden Wabenseitenflächen Deckschichten aufgebracht und mit dem Wabenkörper verbunden werden. Dazu kann ein Polyurethan- oder Epoxydharzkleber verwendet werden. Kostengünstige Waben bestehen häufig aus Polypropylen, das hinsichtlich seiner mechanischen Eigenschaften für sehr viele Verwendungszwecke geeignet ist. Eine Verklebung der Wabenröhrchen untereinander und mit einer Deckschicht bei Verwendung von Polypropylen als Werkstoff für die Wabenkörper macht eine Vorbehandlung der Kontaktstellen an dem Wabenkörper erforderlich. Dies kann durch eine Koronabehandlung erfolgen, wo für eine Verklebung der Wabe mit einer Deckschicht die Kontaktstellen des Wabenkörpers einer elektrischen Hochspannungsbehandlung ausgesetzt werden. Die so behandelten Kontaktstellen lassen sich dann gut mit einer Deckschicht oder dergleichen verkleben.
Problematisch ist hierbei, daß die Korona-behandelten Verbindungsstellen nur eine begrenzte Zeit klebeaktiv bleiben, so daß das Verkleben mit einer Deckschicht entweder unmittelbar oder kurze Zeit nach der Behandlung erfolgen muß.
Häufig wird die Deckschicht beziehungsweise die Deckschichten aber nicht vom Wabenhersteller aufgebracht, sondern von einem belieferten Anwender, der dann die notwendige Vorbehandlung übernehmen müßte, was sich aber nur bei großen Mengen lohnt. Es ist deshalb auch bereits bekannt, beispielsweise aus CH-A-663 378, Polypropylen-Waben zunächst mit einer Koronabehandlung oder dergleichen zu versehen und dann eine Schicht aus einem Vlies aufzukleben beziehungsweise aufzukaschieren, das selbst eine gute Verklebebasis bildet. In diesem Zustand kann dann die Wabe an den Endverbraucher geliefert werden, der die Vliesschicht mit einer beliebigen Deckschicht bekleben kann. Nachteilig ist hierbei jedoch, daß durch die Vliesschicht viel Klebstoff aufgenommen wird und dadurch ein Teil des Gewichtsvorteiles einer Sandwich-Wabe wieder verlorengeht und auch viel Klebstoffmaterial verwendet werden muß.
Wegen der vorbeschriebenen Problematik ist der Anwendungsbereich einer aus Polypropylen oder allgemein aus Polyolefin bestehenden Wabe eingeschränkt, so daß in vielen Fällen auf andere, teurere Wabenmaterialien zurückgegriffen werden muß.

Es besteht daher insbesondere die Aufgabe, ein Verfahren zu entwickeln, das eine einfache und kostengünstige Herstellung der eingangs erwähnten Wabenkörper erlaubt, wobei eine aufwendige Korona- oder dergleichen Zwischenbehandlung bei den einzelnen, auch aus den unterschiedlichsten thermoplastischen Kunststoffen bestehenden Röhrchen entfallen soll.

Aufgabe der vorliegenden Erfindung ist es auch, eine Wabe der eingangs erwähnten Art zu schaffen, die universell einsetzbar ist, dabei kostengünstig produziert und verarbeitet werden kann. Insbesondere soll diese Wabe problemlos auch mit Deckschichten aus unterschiedlichen Materialien unter Verwendung der bisher üblichen Kleber verklebbar sein.

Die erfindungsgemäße Lösung dieser Aufgabe besteht bei dem Verfahren der eingangs erwähnten Art insbesondere darin, daß die einzelnen Röhrchen mit einer zumindest außenseitigen Schicht aus einem Haftvermittler oder dergleichen klebeaktiven thermoplastischen Material in einem Co-Extrusionsverfahren hergestellt werden, daß die einzelnen Röhrchen anschließend seitlich aneinandergereiht werden und daß in einem nachfolgenden Verfahrensschritt zum Verkleben oder Verbinden der aneinander anliegenden Röhrchen diese einer Wärmebehandlung unterzogen werden.

Mit Hilfe des erfindungsgemäßen Verfahrens werden die einzelnen Röhrchen zusammen mit einer klebeaktiven Schicht in einem Co-Extrusions-Verfahren schnell und auf einfache Weise hergestellt. Die klebeaktive Schicht besteht vorzugsweise aus einem thermoplastischen Haftvermittler, der im Vergleich zum Röhrchen-Material bei niedrigeren Temperaturen plastisch wird und seine guten Hafteigenschaften entfaltet. Nach dem Herstellen der Röhrchen werden diese an ihren Längsseiten seitlich zu einem Wabenkörper aneinandergereiht. Durch eine nachfolgende Wärmebehandlung wird die zumindest an den Außenseiten der Röhrchen vorgesehene Haftvermittler-Schicht aktiviert, so daß auch nach dem Abkühlen der Röhrchen diese in der gewünschten Form aneinandergehalten sind.

Bei dem erfindungsgemäßen Verfahren kann die bislang übliche Koronabehandlung der einzelnen Röhrchen entfallen, und zwar unabhängig davon, aus welchem Material die einzelnen Röhrchen hergestellt sind. Die Röhrchen können beispielsweise aus Polycarbonat bestehen oder vorzugsweise auch aus einem elastischen thermoplastischen Kunststoffmaterial hergestellt sein.

Um anschließend auch eine Deckschicht gut mit dem Wabenkörper verkleben zu können, ist es zweckmäßig, wenn die einzelnen Röhrchen mit einer außen- und innenseitigen Schicht aus einem Haftvermittler oder dergleichen hergestellt werden.

Eine besonders einfache und daher bevorzugte Verfahrensweise sieht vor, daß zum Verkleben oder Verbinden der aneinander anliegenden Röhrchen diese einer Heißluft-Behandlung unterzogen werden. Auch durch solch eine Heißluft-Behandlung kann die Haftvermittler-Schicht auf der Außen- und ggf. der Innenseite der einzelnen Röhrchen auf einfache Weise aktiviert und in ihren plastischen Zustand versetzt werden.

Bei dem Wabenkörper der eingangs erwähnten Art sieht die erfindungsgemäße Lösung insbesondere vor, daß die Waben-Röhrchen einen Grundkörper aus einem Polyolefin aufweisen, der zumindest außenseitig eine Beschichtung aus einem klebeaktiven, thermoplastischen Material trägt.
Die klebeaktive Beschichtung ermöglicht einerseits eine haltbare Verbindung der Röhrchen untereinander und außerdem lassen sich so stirnseitig mit den Wabenröhrchen auch Deckschichten gut verkleben. Das Aufbringen der klebeaktiven Beschichtung kann bei der Extrusionsherstellung der Röhrchen in dem erfindungsgemäßen Co-Extrusionsverfahren erfolgen.

Als klebeaktive Beschichtung wird ein thermoplastischer Haftvermittler bevorzugt, der im Vergleich zum Röhrchen-Material bei niedrigeren Temperaturen plastisch wird und seine guten Hafteigenschaften entfaltet. Als klebeaktive Beschichtung kommt aber auch beispielsweise Polycarbonat, ein Polyamid, ein Polyetherimid oder dergleichen in Frage.
Polycarbonat läßt sich besonders gut verkleben, Polyamid bildet eine chemisch besonders beständige Oberfläche und ein Polyetherimid kann verwendet werden, um eine höhere Temperaturfestigkeit zu erzielen.

Bevorzugt ist vorgesehen, daß die klebeaktive Beschichtung innen- und außenseitig an den Wabenröhrchen vorgesehen ist. Die außenseitige Beschichtung ist dabei insbesondere für die Haft- oder Klebeverbindung zwischen den benachbarten Röhrchen wirksam, während die innenseitige Beschichtung eine besonders stabile Verklebung mit einer Deckschicht ergibt.
Bei der Deckschichtverklebung kann nämlich der Klebstoff innenseitig etwas in die Röhrchen eingreifen, so daß eine vergrößerte Klebeverbindungs-Oberfläche gebildet ist. Bei zum Beispiel im Querschnitt sechseckigen Röhrchen wäre dies wegen der einander liegenden Außenwände nicht und bei runden Röhrchen nur sehr begrenzt außenseitig möglich.
Durch die Innenseitenbeschichtung mit klebeaktivem Material können so auch gut im Querschnitt runde oder auch mehreckige, insbesondere sechseckige Röhrchen für die Wabe verwendet werden.

Nachstehend ist die Erfindung mit ihren wesentlichen Einzelheiten anhand der Zeichnungen noch näher erläutert.

Es zeigt:
- Fig. 1: eine stark vergrößerte Schnittdarstellung eines Wabenausschnittes mit einer Deckschicht,
- Fig. 2: eine stark vergrößerte Aufsicht eines Wabenabschnittes mit im Querschnitt runden Röhrchen,
- Fig. 3: eine stark vergrößerte Aufsicht einer Wabe mit im Querschnitt sechseckigen Röhrchen.

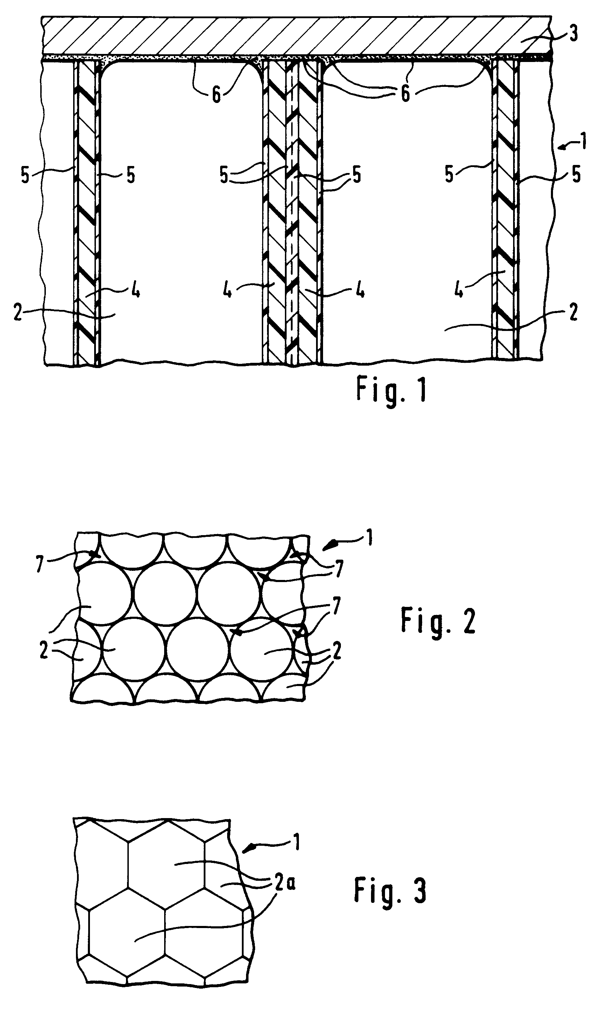

Von einer Wabe 1 ist in Figur 1 ein Teilausschnitt mit zwei nebeneinander befindlichen Röhrchen 2 gezeigt, die mit einer Deckschicht 3 verbunden sind. Zur Verdeutlichung ist dieser Ausschnitt in stark vergrößertem Maßstab dargestellt. Üblicherweise haben die Waben-Röhrchen 2 einen Durchmesser von einigen Millimetern, beispielsweise 3 bis 5 mm.
Die einzelnen Röhrchen 2 bestehen aus einem Grundkörper 4 aus Thermoplast, zum Beispiel einem Polyolefin und einer Beschichtung 5 aus einem klebeaktiven, thermoplastischen Material. Die Beschichtung 5 ist im gezeigten Ausführungsbeispiel sowohl innenseitig als auch außenseitig bei den einzelnen Röhrchen 2 vorgesehen. Gegebenenfalls würde eine Außenseitenbeschichtung genügen.
Die Röhrchen 2 sind mit Hilfe der außenseitigen Haftvermittler-Schicht oder dergleichen aneinander gehalten, welche durch eine vorübergehende Wärmebehandlung aktiviert wurde. Die Deckschicht 3 ist mit den offenen Stirnseiten der Röhrchen 2 mit Hilfe von Klebstoff verklebt, welcher an der innenseitigen Haftvermittler-Schicht gut anhaften kann. Zur Verdeutlichung sind die Klebstoffschichten punktiert gekennzeichnet.
Würden nur die Außenseiten mit der Beschichtung 5 versehen sein, würden sich im Verbindungsbereich zu der Deckschicht 3 nur sehr kleine Klebeflächen ergeben. Bei im Querschnitt runden Röhrchen 2 (Figur 2) kann der die Deckschicht 3 haltende Klebstoff zwar etwas in die von drei benachbarten Röhrchen 2 gebildeten Zwischenräume 7 eingreifen, so daß zumindest in diesem Bereich bei runden Röhrchen eine etwas vergrößerte Klebefläche vorhanden ist.
Bei im Querschnitt sechseckigen Röhrchen 2a (Figur 3) sind solche Zwischenräume 7 nicht vorhanden, so daß in diesem Falle ein Anhaften des Klebstoffes 6 nur stirnseitig an der sehr dünnen Beschichtung 5 erfolgen könnte, was aber keine besonders haltbare Verbindung ergibt. Es ist deshalb bevorzugt vorgesehen, daß die Röhrchen 2, 2a auch innenseitig eine klebeaktive Beschichtung 5 aufweisen, so wie dies in Figur 1 gezeigt ist. Dadurch kann sich der Klebstoff 6 im Randbereich zwischen der Deckschicht 3 und den Stirnenden der Wabenröhrchen 2, 2a etwas großflächiger verbinden, so daß eine sehr stabile Verbindung zwischen Deckschicht 3 und dem Wabenkörper vorhanden ist.
Die klebeaktive Beschichtung 5, die eine besonders gute Verbindung mit dem Klebstoff 6 eingeht, wird in einem thermoplastischen Co-Extrusionsverfahren auf die Wandungen der Waben-Röhrchen 2, 2a aufgebracht beziehungsweise direkt bei der Herstellung der Wabenröhrchen auch mit diesen thermoplastisch verbunden. Die Beschichtung 5 kann ein Polycarbonat, ein Polyamid, ein Polyetherimid oder dergleichen sein. Als klebeaktive Schicht wird jedoch ein thermoplastischer Haftvermittler bevorzugt.

Eine solche Schicht aus einem thermoplastischen Haftvermittler erlaubt es, bei der Herstellung des Wabenkörpers auch auf die Verwendung eines Dispersionsklebers zu verzichten. Da bei dem erfindungsgemäßen Verfahren somit kein Dispersionskleber zur Herstellung der Wabenkörper verwendet werden muß, ist das erfindungsgemäße Verfahren umweltschonender, kostengünstiger und gestattet es durch die Verwendung ausschließlich thermoplastischer Materialien, die hergestellten Wabenkörper auf einfache Weise gegebenenfalls auch wieder zu recyceln.

## Patentansprüche

1. Verfahren zur Herstellung eines Wabenkörpers, welcher aus einer Vielzahl von miteinander seitlich verklebten Röhrchen besteht, **dadurch gekennzeichnet**, daß die einzelnen Röhrchen (2, 2a) mit einer zumindest außenseitigen Schicht aus einem Haftvermittler oder dergleichen klebeaktiven thermoplastischen Material in einem Co-Extrusionsverfahren hergestellt werden, daß die einzelnen Röhrchen (2, 2a) anschließend seitlich aneinandergereiht werden und daß in einem nachfolgenden Verfahrensschritt zum Verkleben oder Verbinden der aneinander anliegenden Röhrchen diese einer Wärmebehandlung unterzogen werden.

2. Verfahren nach Anspruch 1, dadurch gekennzeichnet, daß die einzelnen Röhrchen mit einer außen- und innenseitigen Schicht aus einem Haftvermittler oder dergleichen hergestellt werden.

3. Verfahren nach Anspruch 1 oder 2, dadurch gekennzeichnet, daß zum Verkleben oder Verbinden der aneinander anliegenden Röhrchen diese einer Heißluft-Behandlung unterzogen werden.

4. Wabenkörper aus einer Vielzahl von miteinander seitlich verklebten Röhrchen, dadurch gekennzeichnet, daß die Röhrchen (2, 2a) einen Grundkörper (4) aus einem Thermoplast aufweisen, der zumindest außenseitig eine Beschichtung (5) aus einem klebeaktiven, thermoplastischen Material trägt.

5. Wabenkörper nach Anspruch 4, dadurch gekennzeichnet, daß die klebeaktive Beschichtung (5) ein Polycarbonat, ein Polyamid, ein Polyetherimid oder dergleichen ist.

6. Wabenkörper nach Anspruch 4 oder 5, dadurch gekennzeichnet, daß die klebeaktive Beschichtung (5) innen- und außenseitig an den Röhrchen (2, 2a) vorgesehen ist.

7. Wabenkörper nach einem der Ansprüche 4 bis 6, dadurch gekennzeichnet, daß die Röhrchen (2, 2a) einen runden, einen gerundeten oder einen mehreckigen Querschnitt aufweisen.

## Claims

1. A process for producing a honeycomb structure comprising a plurality of small tubes bonded to one another at their sides, **characterized in that** the individual small tubes (2, 2a) are produced with a layer, at least on the outside, made of a bonding agent or similar adhesively active thermoplastic material in a co-extrusion process, that the individual small tubes (2, 2a) are thereafter lined up alongside one another, and that in a subsequent process step the small tubes lying adjacent to one another are subjected to a thermal treatment for bonding or joining them.

2. A process as claimed in claim 1, characterized in that the individual small tubes are produced with an outside and inside layer of a bonding agent or the like.

3. A process as claimed in claim 1 or claim 2, characterized in that for bonding or joining the small tubes lying alongside one another, the same are subjected to a hot-air treatment.

4. A honeycomb structure made of a plurality of small tubes bonded to one another at their sides, characterized in that the small tubes (2, 2a) have a base body (4) which is made from a thermoplastic and carries, at least on the outside, a coating (5) made of an adhesively active thermoplastic material.

5. A honeycomb structure as claimed in claim 4, characterized in that the adhesively active coating (5) is a polycarbonate, a polyamide, a polyetherimide or the like.

6. A honeycomb structure as claimed in claim 4 or claim 5, characterized in that the adhesively active coating (5) is provided on the small tubes (2, 2a) on the inside and on the outside.

7. A honeycomb structure as claimed in any one of claims 4 to 6, characterized in that the small tubes (2, 2a) have a round, a rounded or a polygonal cross section.

## Revendications

1. Procédé pour former un corps alvéolé composé d'une multitude de petits tubes collés les uns aux autres par le côté, caractérisé en ce que les différents petits tubes (2, 2a) sont fabriqués munis d'au moins une couche extérieure, par voie de coextrusion, à partir d'un agent adhésif ou d'un matériau thermoplastique adhésif analogue, en ce que les différents petits tubes (2, 2a) sont ensuite rangés les uns à côté des autres, et en ce que, dans une étape suivante du procédé consistant à coller ou à assembler les petits tubes appliqués les uns contre les autres, ceux-ci sont soumis à un traitement thermique.

2. Procédé selon la revendication 1, caractérisé en ce que les différents petits tubes sont fabriqués munis d'une couche extérieure et d'une couche intérieure, à partir d'un agent adhésif ou analogues.

3. Procédé selon la revendication 1 ou 2, caractérisé en ce que, pour coller ou assembler les différents petits tubes appliqués les uns contre les autres, ceux-ci subissent un traitement à air chaud.

4. Corps alvéolé composé d'une multitude de petits tubes collés les uns aux autres par le côté, caractérisé en ce que les petits tubes (2, 2a) présentent un corps de base (4) composé d'un thermoplaste qui porte au moins à l'extérieur un revêtement (5) composé d'un matériau thermoplastique adhésif.

5. Corps alvéolé selon la revendication 4, caractérisé en ce que le revêtement adhésif (5) est un polycarbonate, un polyamide, un polyétherimide ou analogues.

6. Corps alvéolé selon la revendication 4 ou 5, caractérisé en ce que le revêtement adhésif (5) est prévu sur l'intérieur et sur l'extérieur des petits tubes (2, 2a).

7. Corps alvéolé selon l'une des revendications 4 à 6, caractérisé en ce que les petits tubes (2, 2a) présentent une section ronde, arrondie ou polygonale.
